Europäisches Patentamt

(19) European Patent Office

Office européen des brevets

(11) Veröffentlichungsnummer: **0 170 610**
**A2**

(12) **EUROPÄISCHE PATENTANMELDUNG**

(21) Anmeldenummer: 85730058.6

(22) Anmeldetag: 12.04.85

(51) Int. Cl.⁴: **F 24 J 2/12**

(30) Priorität: 13.04.84 DE 8412066 U

(43) Veröffentlichungstag der Anmeldung:
05.02.86 Patentblatt 86/6

(84) Benannte Vertragsstaaten:
AT BE CH DE FR GB IT LI LU NL SE

(71) Anmelder: ATP Arbeitsgruppe Technische
Photosynthese GmbH & Co. Produktions KG
Quastenhornweg 14a
D-1000 Berlin 22(DE)

(72) Erfinder: Radebold, Reinhart, Dr.
Quastenhornweg 14 a
D-1000 Berlin 22(DE)

(54) **Zerlegbarer Parabolspiegel zur Konzentrierung von Strahlung.**

(57) Die Erfindung betrifft einen zerlegbaren Parabolspiegel zur Konzentrierung von Strahlung. Die vorliegende Bauweise vermeidet teure und schwere Konstruktionen aus tiefgezogenen Blechen oder speziellen Zuschnitten, die verschweißt werden, um parabolische Formen zu erzeugen, und verwendet (bis auf eine Ausnahme) lediglich rechteckige bzw. nahezu rechteckige Teile aus Sperrholz und Edelstahl oder Aluminium. Aus diesen leicht herzustellenden Ausgangsteilen ohne konische Zuschnitte wird der Reflektor zusammengesetzt, wobei im Wesen der Erfindung liegt, daß der Reflektor aus jetzt konischen Segmenten zusammengebaut wird. Die dabei entstehenden parabolischen Reflektoren, gleich ob es sich um rotationssymmetrische Körper handelt oder um Ausschnitte davon, haben dank ihrer Ausbildung als Doppelschalen und ihrer internen Holme eine große Eigenstabilität und benötigen lediglich einen konzentrischen Ring, um gelagert zu werden und um die auf den Reflektor wirkenden Wind- und Gravitationskräfte auf den Boden zu übertragen.

./...

FIG.3

I

## Zerlegbarer Parabolspiegel zur Konzentrierung von Strahlung

Beschreibung

Die Erfindung betrifft einen zerlegbaren Parabolspiegel zur Konzentrierung von Strahlung.

Parabolspiegel für Solarenergie-Anlagen werden heute entweder massiv in Stahlbauweise mit Glasspiegeln oder aber in Leichtbauweise mit Folienspiegeln erstellt. Massive Metallspiegel sind im Prinzip zerlegbar, ihre Herstellung ist aber material- und kostenintensiv, da Formen entweder zum Gießen von Segmenten oder zum Verformen von Stahlblechen gebaut werden müssen. Die Verspiegelung selbst ist wegen der gekrümmten Flächen schwierig, so wird Hilfe genommen bei Spiegelglasmosaiken oder aufklebbaren Spiegelfacetten. Wie nicht anders zu erwarten sind massive Spiegel schwer und benötigen umfangreiche Investitionen für die Fertigung, ganz zu schweigen von den Aufwendungen für die Spiegelnachführung wegen der zu kippenden Massen. Sollen Reflektoren unterschiedlichen Durchmessers gebaut werden, sind stets neue Formen erforderlich.

Die Aufgabe wird nach der Erfindung durch die in den Patentansprüchen angegebenen Maßnahmen gelöst.

Die Erfindung wird im folgenden anhand von Zeichnungen an einem Ausführungsbeispiel näher erläutert.

Die vorliegende Bauweise als Gegenstand der Anmeldung geht einen grundsätzlich anderen Weg. Sie vermeidet teure und schwere Konstruktionen aus tiefgezogenen Blechen oder speziellen Zuschnitten, die verschweißt werden, um parabolische Formen zu erzeugen, und verwendet (bis auf eine Ausnahme) lediglich rechteckige bzw. nahezu rechteckige Teile aus Sperrholz und Edelstahl oder Aluminium. Aus diesen leicht herzustellenden Ausgangsteilen ohne konische Zuschnitte wird der Reflektor zusammengesetzt, wobei im Wesen der Erfindung liegt, daß der Reflektor aus jetzt konischen Segmenten zusammengebaut wird. Der Neuerung gemäß sind jetzt keine Einschränkungen inbezug auf den Durchmesser vorhanden; es ist unproblematisch, den Radius zu ändern und auch die Krümmung. Formen entfallen, die Vorrichtung zum Zusammenbau der Streifen zu Segmenten sind selbst Grundbausteine der Segmente. Die dabei entstehenden parabolischen Reflektoren, gleich ob es sich um rotationssymmetrische Körper handelt oder um Ausschnitte davon,

- 1 -

2

haben dank ihrer Ausbildung als Doppelschalen und ihrer internen Holme eine große Eigenstabiltät und benötigen lediglich einen konzentrischen Ring, um gelagert zu werden und um die auf den Reflektor wirkenden Wind- und Gravitationskräfte auf den Boden zu übertragen.

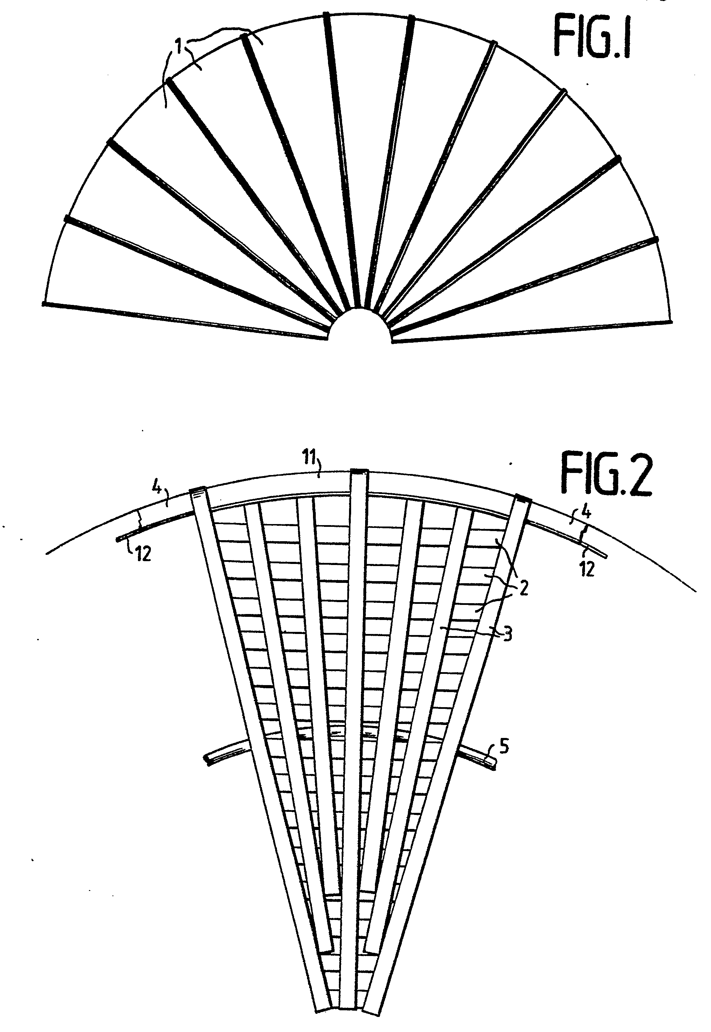

In Fig. 1 ist der Parabolspiegel nach der Erfindung als Vorderansicht dargestellt. Nicht dargestellt ist das Traggestell, da es nicht Gegenstand der Neuerung ist. Der Parabolspiegel besteht aus Segmenten 1, deren Zahl zwischen der für ein geschlossenes Paraboloid erforderlichen und einer beliebigen kleineren gewählt werden kann. Die Segmente sind durch horizontale und vertikale Laschen 4,12 miteinander verschraubbar.

Fig. 2 zeigt eine Draufsicht auf ein Segment, das über zwei horizontale Laschen 4 und zwei vertikale Laschen 12 mit benachbarten Segmenten verbindbar ist. Es sind Querstreben 2 und Längsstreben 3 miteinander und mit dem Spiegelrand 11 verbunden. Wie aus der Figur ersichtlich ist, sind die Querstreben 2 und die Längsstreben 3 rechteckige bzw. nahezu rechteckige Teile, während die horizontale Lasche 4 und das entsprechende Teil des winkelförmigen Spiegelrandes 11 in der ganzen Konstruktion als einzige Ausnahme ein gebogen zuzuschneidendes Teil ist. In dieser Figur ist schließlich noch ein Abschnitt eines Tragrings 5 als Bestandteil des ansonsten nicht dargestellten Traggestells zu sehen.

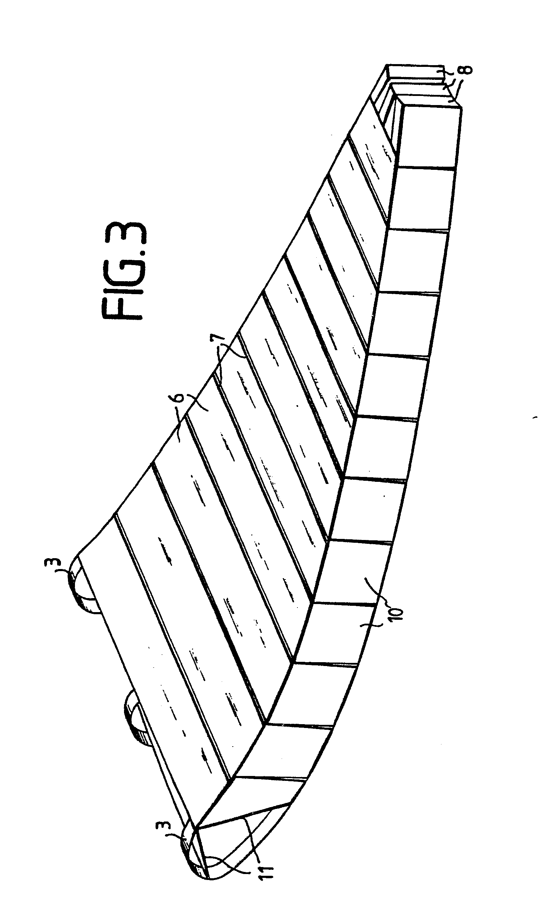

In Fig. 3 ist ein fertiggestelltes Segment dargestellt. Man erkennt den winkelförmigen Holm 11, der den Spiegelrand bildet. Die reflektierende Schicht ist aus Streifen 6 aus einem geeigneten Material zusammengesetzt. Die Streifen 6 werden in Richtung der Querstreben 2 an den Längsstreben 3 befestigt. Dabei werden Dehnungsausgleichsfugen 7 vorgesehen, um eventuellen Verformungen durch Temperatureinflüsse vorzubeugen. Auch die Streifen 6 haben eine rechteckige oder nahezu rechteckige Form und sind daher leicht und schnell zuschneidbar. Jedes Segment besteht aus mehreren Rippen 8.

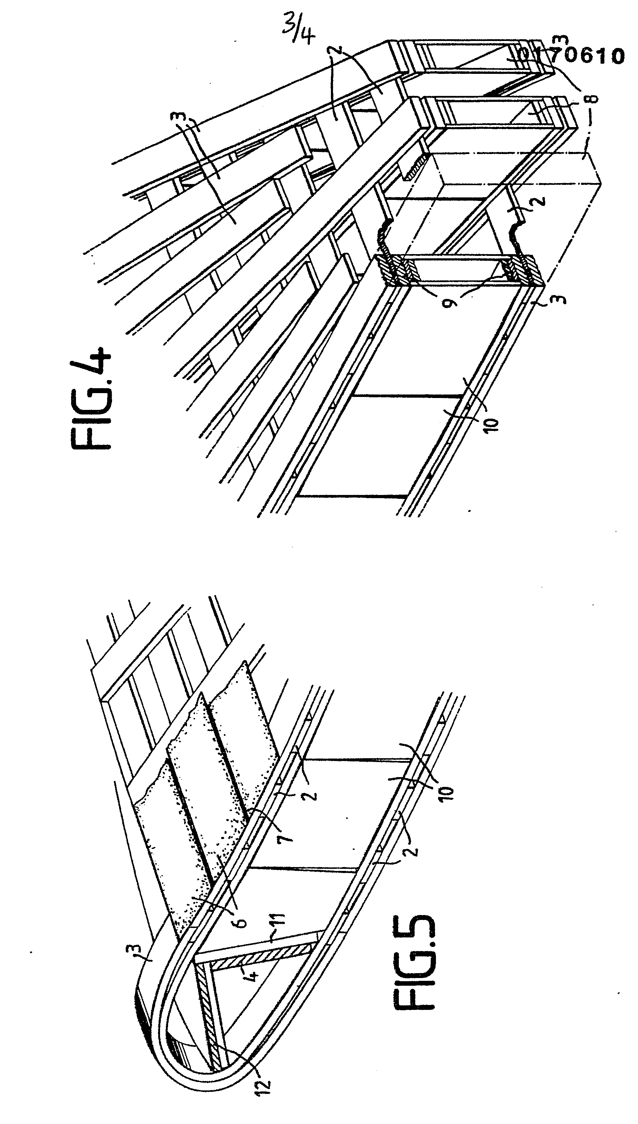

Aus der Figur 4 ist ein Teil des Aufbaus eines Segmentes zu ersehen. Die Rippen 8 sind in Form eines Kastenträgers ausgeführt, der von Längsstreifen 9 und Querplatten 10 gebildet wird. Sowohl Längsstreifen 9 als auch Querplatten 10 sind rechteckig und daher leicht zuschneidbar und verarbeitbar. Miteinander verbunden werden die Rippen 8 durch die Querstreben 2. Die Rippen 8 eines jeden Segmentes bilden mit den Querstreben 2 und den Längsstreben 3 eine Doppelschale mit Zwischenräumen. Die Stabilität der Rippen 8 wird in keiner Weise dadurch beeinträchtigt, daß zwischen den Querplatten 10, wie in den Fig. 3, 4 und 5 angedeutet, winkelförmige Fugen bestehen. Diese kommen dadurch zustande, daß die Längsstreifen 9 etwas gekrümmt werden und die Rippen 8 eine parabolische Krümmung in der Längsrichtung annehmen.

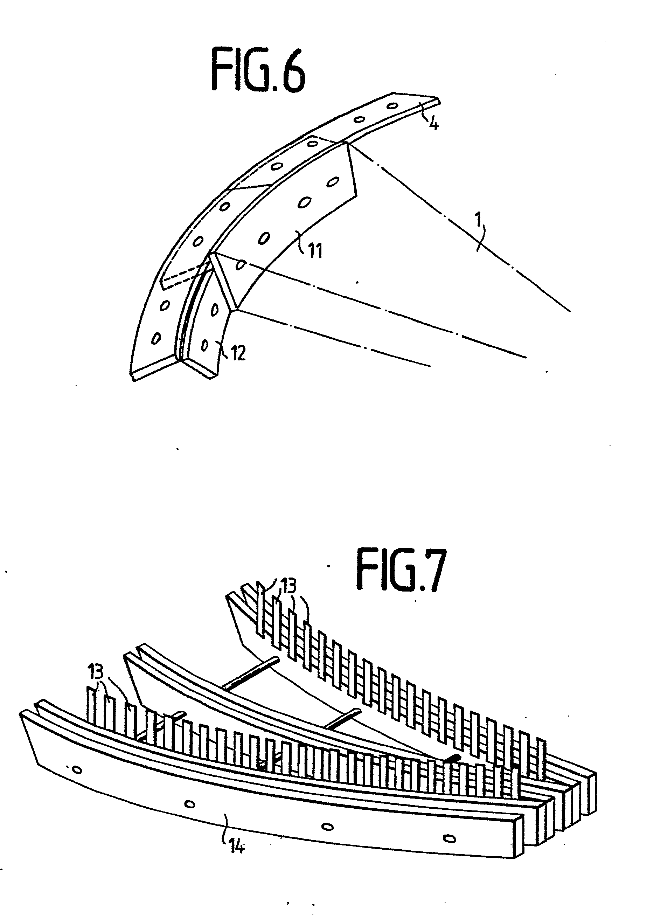

Aus der Fig. 5 ist ein Teil des Aufbaus eines Segmentes am Außenrand näher zu ersehen. Die Längsstreben 3 der Oberseite der Doppelschale sind um einen winkelförmigen Holm 11 zu den Längsstreben der Unterseite hin gebogen. Dadurch wird ein wulstförmiger Außenrand erzielt, der in Verbindung mit dem Traggestell eine beschädigunglose Bespannung des Parabolspiegels mit einem strahlungsdurchlässigen Material ermöglicht. Dabei kann ein Befestigungspunkt des Traggestells über dem Brennpunkt des Parabolspiegels vorgesehen werden. An diesem Befestigungspunkt wird eine Spinne angebracht, deren Arme an den Holmen des Spiegelrandes befestigt werden. Auf diese Weise kann der Parabolspiegel von dem strahlungsdurchlässigen Material eingehüllt und damit vor Witterungseinflüssen geschützt werden.

In Fig. 6 ist der Spiegelrand dargestellt, der aus dem winkelförmigen Holm 11 besteht. Die winkelförmigen Holme der Segmente 1 sind mit den horizontalen Laschen 4 und den vertikalen Laschen 12 des Spiegelrandes verschraubbar, wodurch die vorgesehene Form des Parabolspiegels aus mehreren Segmenten 1 entsteht.

Aus der Fig. 7 ist zu entnehmen, wie die Segmente hergestellt werden. Zunächst werden die Rippen angefertigt, wobei die Längsstreifen parabolisch gebogen und mittels der Querplatten zu einem Kastenträger zusammengefügt werden. Da die Bestandteile der Rippen rechteckig oder nahezu rechteckig sind, sind keine aufwendigen Zuschneidearbeiten erforderlich. Die parabolische Biegung wirft wegen der Elastizität des Materials keine Probleme auf. Die Rippen 8 müssen nunmehr mit den winkelförmigen Holmen 11 und mit den Querstreben 2 und den Längsstreben 3 verbunden werden. Um diese Rippen 8 vor dem Verbinden exakt gegeneinander positionieren zu können, ist das in Fig. 7 gezeigte Lehrgerüst vorgesehen. Es besteht aus Längsträgern 14 zur Aufnahme je einer Rippe 8 sowie Kämmen 13 zur Positionierung der Querstreben 2. Die Längsträger 14 sind widerum aus Rippen 8 gebildet. Die Rippen 8 werden dann mit Hilfe der Kämme 13 durch die Querstreben 2 miteinander verbunden. Auf den Querstreben 2 werden danach die Längsstreben 3 befestigt. Zum Schluß werden die Streifen 6 der reflektierenden Schicht aufgebracht.

An dem Traggestell für den Parabolspiegel sind noch Befestigungsmöglichkeiten für Strahlungsabsorber oder -sender, nachgeschaltete Geräte und eventuell benötigte Sensoren vorgesehen. Es ist nach Bedarf drehbar und/oder kippbar ausgeführt.

Der Vorteil des vorstehend beschriebenen zerlegbaren Parabolspiegels besteht darin, daß er aus leicht und schnell herstellbaren Teilen kostengünstig und trotzdem stabil und effektiv hergestellt werden kann.

Folienspiegel scheinen kostengünstiger zu sein. In Wirklichkeit sind auch hier die Einsparungen gering, denkt man an die stabile Konstruktion für den biegesteif auszuführenden Tragring für die Folie; der Tragring selbst muß auch nachgeführt werden. Es kommt hinzu, daß mit Folien nur Spiegel mit großer Brennweite , d.h. geringer Krümmung herzustellen sind, da sonst die Abweichungen der Kettenlinie von der gewünschten parabolischen Form zu groß wird. Große Brennweite aber bedeutet, daß der Konverter für die Strahlung weit entfernt sitzt und der Tragring auch riesige Drehmomente aufnehmen muß. Die Aufgabe besteht daher darin, einen zerlegbaren Parabolspiegel zu schaffen, der aus kostengünstigen, leicht herstell- und bearbeitbaren Teilen besteht und trotzdem außerordentlich stabil ist.

85730058.6

ZERLEGBARER PARABOLSPIEGEL ZUR KONZENTRIERUNG VON STRAHLUNG

Patentansprüche

1. Zerlegbarer Parabolspiegel zur Konzentrierung von Strahlung, gekennzeichnet durch folgende Merkmale:

a. Der Parabolspiegel besteht aus doppelschaligen Segmenten (1) mit einem wulstförmigen Holm (11) bilden;

b. die Segmente (1) sind durch horizontale und vertikale Laschen (4,12) miteinander verschraubbar;

c. die horizontalen und vertikalen Laschen (4,12) bilden eine Verstärkung des Spiegelrandes;

d. jedes Segment (1) besteht aus mehreren Rippen (8) und dem winkelförmigen Holm (11) am Außenrand, Streben (2,3) und einer reflektierenden Schicht (6) aus Streifen;

e. die Rippen (8) sind vom Innen- zum Außenrand parabolisch gekrümmt;

f. jede Rippe (8) hat die Form eines Kastenträgers, welcher aus Längsstreifen (9) und Querplatten (10) gebildet ist;

g. die Rippen (8) eines jeden Segmentes (1) sind durch Quer- und Längsstreben (2,3) zu einer Doppelschale mit Zwischenräumen verbunden;

h. die reflektierende Schicht ist in Form von Streifen (6) in Richtung der Querstreben (2) an den Längsstreben (3) befestigt;

i. zwischen den Streifen (6) der reflektierenden Schicht sind Dehnungsausgleichsfugen (7) vorgesehen;

j. die Längsstreben (3) der Oberseite der Segmente sind am Spiegelrand zu den Längsstreben der Unterseite hin gebogen;

k. Längs- und Querstreben (2,3), Längsstreifen (9) und Querplatten (10),vertikale Holme (12) sowie reflektierende Streifen (6) sind rechteckige oder nahezu rechteckige Teile.

2. Zerlegbarer Parabolspiegel nach Anspruch 1, dadurch gekennzeichnet, daß auf der nichtspiegelnden Rückseite Befestigungsvorrichtungen vorgesehen sind, an denen er an jeder Rippe mittels Seilen oder Laschen auf einen zur Spiegelachse konzentrischen Tragring (5) als Bestandteil eines Traggestells aufgelegt und befestigt wird.

3. Zerlegbarer Parabolspiegel nach den Ansprüchen 1 und 2, dadurch gekennzeichnet, daß am Traggestell Befestigungsmöglichkeiten für Strahlungsabsorber oder -sender, nachgeschaltete Geräte und/oder Sensoren vorgesehen sind.

4. Zerlegbarer Parabolspiegel nach den Ansprüchen 1 bis 3, dadurch gekennzeichnet, daß an den Holmen (4, 11) am Spiegelrand Befestigungsmöglichkeiten für eine Spinne vorgesehen sind, deren Mittelpunkt an einem Befestigungspunkt des Traggestells über dem Brennpunkt des Parabolspiegels liegt.

5. Zerlegbarer Parabolspiegel nach den Ansprüchen 1 bis 4, dadurch gekennzeichnet, daß der Parabolspiegel unter Einschluß der Spinne von einem strahlungsdurchlässigen Material eingehüllt ist.

¼

FIG.1

FIG.2

FIG.3

FIG.4

FIG.5

EP 0170610

# FIG.6

4

1

11

12

# FIG.7

13

13

14